# EUROPÄISCHE PATENTANMELDUNG

(11) **EP 4 344 908 A2**
(43) Veröffentlichungstag der Anmeldung: **03.04.2024**
(21) Anmeldenummer: 23020423.2
(22) Anmeldetag: 08.09.2023
(51) Int. Cl.: B60D 1/01, B60D 1/36, B60D 1/62

(54) **AUSRICHTSYSTEM ZUR ANNÄHERUNG EINES FAHRZEUGS AN EIN HIERZU RÄUMLICH BEABSTANDETES ZIELOBJEKT**

(30) Priorität: 09.09.2022 DE 102022003318
(71) Anmelder: JOST-Werke Deutschland GmbH, 63263 Neu-Isenburg (DE)
(72) Erfinder: Müller, Mark, 60431 Frankfurt (DE); Kaufhold, Benjamin, 37136 Seeburg (DE); Haber, Steffen, 64521 Gross-Gerau (DE); Gitzen, Stephan, 64560 Riedstadt (DE); Ender, Yurtsever, 63303 Dreieich (DE); Jacobs, Daniel, 63322 Rödermark (DE)
(74) Vertreter: Straubel, Dirk

(57) **Zusammenfassung**

Es wird ein Ausrichtsystem zur Annäherung eines Fahrzeugs (10) an ein hierzu räumlich beabstandetes Zielobjekt (40) beschreiben, umfassend ein an dem Fahrzeug (10) angebrachtes Objekterkennungsmittel (20) und ein Verbindungselement (30), mit welchem das Zielobjekt (40) in einer Endlage lösbar gehalten ist, wobei das Objekterkennungsmittel (20) in Richtung des Zielobjektes (40) ausgerichtet und mittels der Daten des Objekterkennungsmittels (20) ein Bild generiert ist, in welchem das Zielobjekt (40) zusammen mit einer Leitmarkierung (50) während der Annäherung des Fahrzeugs (10) dargestellt ist. Der Erfindung lag die Aufgabe zugrunde, eine technische einfachere Lösung zur Darstellung einer Leitmarkierung (50) zu entwickeln. Die Aufgabe wird erfindungsgemäß dadurch gelöst, dass die Leitmarkierung (50) an mindestens einer in einem Einfahrbereich (31) des Verbindungselementes (30) angeordneten Komponente (11) des Fahrzeugs (10) aufgebracht ist.

## Beschreibung

Die Erfindung betrifft ein Ausrichtsystem zur Annäherung eines Fahrzeugs an ein hierzu räumlich beabstandetes Zielobjekt gemäß der im Oberbegriff von Anspruch 1 stehenden Merkmale.

Das Objekterkennungsmittel kann insbesondere eine Kamera sein, mit deren Hilfe dem Fahrer oder der Fahrerin bei Annäherung des Fahrzeugs an ein Zielobjekt ein Bild des rückwärtigen Verkehrsraumes zusammen mit dem dort abgestellten Zielobjekt in der Fahrerkabine bereitstellt wird. Unter Zuhilfenahme des Bildes lässt sich das Zugfahrzeug präziser an das Zielobjekt heranmanövrieren.

Die EP 2 987 663 A1 beschreibt ein Fahrerassistenzsystem für ein Nutzfahrzeuggespann als Sattelzug, bestehend aus einem Zugfahrzeug und einem Sattelauflieger, oder als Gliederzug, bestehend aus einem Zugfahrzeug und einem Anhänger. An dem Zugfahrzeug ist eine Videokamera angebracht, deren Videobild auf einem im Sichtbereich des Fahrers angeordneten Bildschirm dargestellt ist. Die Videokamera ist in Fahrtrichtung derart vor oder in dem zugfahrzeugseitigen Kupplungs-Aufnahmeteil angebracht, dass sowohl ein Bereich des Kupplungs-Aufnahmeteils als auch ein rückwärtiges Umfeld mit dem Kuppelelement des Sattelzugs oder Gliederzugs im Videobild gesehen werden kann. In dem Videobild ist außerdem eine Leitmarkierung als Peilhilfe eingeblendet, mit deren Hilfe ein Ankuppelvorgang sicher, schnell und bequem durchführbar sein soll. Es hat sich jedoch als aufwendig herausgestellt, die eingeblendete Leitmarkierung in Abhängigkeit der geometrischen Gegebenheiten des Zugfahrzeugs und Kupplungsaufnahmeteils sowie des Kuppelelementes stets spezifisch programmieren zu müssen.

Einen weiteren Stand der Technik bildet die DE 10 2019 201 572 A1 mit einem Führungssystem zum Anhängen eines Arbeitsgerätes an einen Traktor. An dem Traktor ist eine Kamera montiert, vor dessen Objektiv unmittelbar eine Referenzführung mit einer Kante angeordnet ist. Das Objektiv der Kamera ist derart konfiguriert, dass sowohl die Kante als auch Arbeitsgeräteverbindungen in dem Bild sichtbar sind, so dass der rückwärtige Abstand zu dem Arbeitsgerät besser abgeschätzt werden kann.

In der DE 10 2004 008 928 A1 ist ein Verfahren zum Ankuppeln eines Anhängers unter Einsatz einer Fahrzeugniveauregulierung offenbart. Über einer heckseitig am Fahrzeug angeordneten Anhängerkupplung ist eine Rückfahrkamera angebracht, welche die Anhängerkupplung und den rückwärtigen Fahrraum sowie einen gegebenenfalls dort stehenden Anhänger erfasst. Mit Hilfe der Rückfahrkamera lässt sich das Fahrzeug rückwärts bis in den Nahbereich des Anhängers rangieren und dann mittels der Fahrzeugniveauregulierung absenken, so dass das anhängerseitige Gegenstück der Kupplung für ein mechanisches Kuppeln nicht angehoben zu werden braucht.

Die DE 20 2009 018 636 U1 schlägt eine Zielvorrichtung als Ankuppelhilfe für ein Fahrzeug und einen Anhänger vor. Die Zielvorrichtung umfasst einen auf den Kugelkopf einer Anhängerkupplung aufsetzbaren Stab mit einer endseitig daran befestigten und nach hinten strahlenden Laser-Lichtquelle. Mittels eines Magnetfußes wird auf der Deichsel des Anhängers ebenfalls ein Stab mit einem endseitig daran befestigten Zielkörper mit einer Markierung befestigt. Während einer rückwärtigen Annäherung des Fahrzeugs ist der Auftreffpunkt des Lasers auf der Markierung des Zielkörpers sichtbar und kann für ein verbessertes Rangieren in Richtung des Anhängers genutzt werden. Unmittelbar vor einer mechanischen Verbindung der Kupplungshälften muss die Zielvorrichtung demontiert werden.

Die WO 2009/006 529 A1 befasst sich mit einem elektronischen Anhängerkupplungssystem, mit einer vorzugsweise an der Anhängerdeichsel befestigten Stereo-Kamera, die mindestens zwei Bildsensoren aufweist, und mit einem Prozessor, welcher die Bilddaten der Bildsensoren verarbeitet. Mit Hilfe der ausgewerteten Bilddaten soll das Zugfahrzeug autonom an das Anhängerfahrzeug angenähert werden.

Die aus dem Stand der Technik bekannten Rangierhilfen eint der Nachteil, dass diese aufwendig zu installieren sind und während der Benutzung den Fahrer mit zusätzlichen Handgriffen belasten.

Aus diesem Grund lag der Erfindung die Aufgabe zugrunde, eine technische einfachere Lösung zur Darstellung einer Leitmarkierung zu entwickeln.

Die Aufgabe wird mit den Merkmalen des Anspruchs 1 gelöst.

Unter einem Objekterkennungsmittel wird beispielsweise eine Kamera verstanden, welche im nicht-sichtbaren, zum Beispiel im infraroten Bereich, und/oder im sichtbaren Spektrum arbeiten kann. Neben 2D-Bildsensoren sind auch bildgebende Sensoren geeignet, welche 3D-Informationen erfassen können. Hierzu zählen insbesondere Laserscanner, Radarsensoren und Ultraschallsensoren. Das Objekterkennungsmittel kann zum besseren Schutz gegen äußere Einflüsse ein Gehäuse umfassen und vorzugsweise mit diesem eine gemeinsame Baueinheit bilden.

Das Objekterkennungsmittel ist bezüglich der Leitmarkierung ortsfest angebracht und zu dieser ausgerichtet. Der Einfahrbereich ist ein Abschnitt vor dem Verbindungselement, über welchen das Zielobjekt während der Annäherung an das Verbindungselement hinwegfährt. Das Zielobjekt verändert während der Annäherung in der Längsachse des Fahrzeugs seine Relativposition zu der Leitmarkierung.

Der Einfahrbereich ist insbesondere auf der bezüglich des Objekterkennungsmittels abgewandten Seite des Verbindungselementes angeordnet. Hieraus resultiert in der Längsachse in Richtung des Zielobjekts eine Abfolge von Objekterkennungsmittel, vorzugsweise Verbindungselement, und Leitmarkierung.

Die von dem Objekterkennungsmittel bereitgestellte Bild kann im Fahrerhaus auf einer Anzeigevorrichtung dargestellt werden und dem Fahrer oder der Fahrerin als visuelle Manövrierhilfe zum Ankuppeln des Anhängerfahrzeugs dienen. Es ist jedoch auch möglich, dass die von dem Objekterkennungsmittel bereitgestellten Daten ohne Anzeige des Bildes in das elektronische Datensystem des Zugfahrzeug einzuspeisen, so dass das Zugfahrzeug auf Basis dieser Daten ein autonomes oder semi-autonomes Kuppeln des Anhängerfahrzeugs vornimmt. Bei einem semi-autonomen Kuppeln handelt es sich um ein Assistenzsystem für den Fahrer zur Unterstützung während des Rangierens.

Vorteilhafterweise ist die Leitmarkierung physisch permanent vorhanden. Hierfür hat es sich als besonders günstig herausgestellt, wenn die Leitmarkierung auf die Komponente lackiert, geklebt, geprägt, gefräst und/oder aus der Komponente reliefartig hervortretend ausgebildet ist.

Gemäß einer besonders zweckmäßigen Ausführungsform umfasst die Leitmarkierung mindestens ein starr oder beweglich an der Komponente gelagertes Peilelement. Ein starres Peilelement kann eine oder mehrere emporragende Sockel, Ausnehmungen oder Erhebungen aufweisen. Sofern zwei dieser Peilelemente in Richtung der Endlage des Zielobjekts und/oder mit dem Objekterkennungsmittel fluchtend angeordnet sind, ergibt sich eine Peillinie, auf welcher das Fahrzeug dem Zielobjekt angenähert werden kann.

Eine weitere bevorzugte Ausführungsform besteht darin, dass die Leitmarkierung mittels einer Lichtquelle auf die Komponente projiziert ist. Bei dieser Ausführungsform ist die Leitmarkierung nur temporär vorhanden. Durch ein An- oder Abschalten der Lichtquelle entsteht oder verschwindet die Leitmarkierung. Dieses ist insofern günstig, als dass die Leitmarkierung lediglich unmittelbar vor dem Zusammenführen von Verbindungselement und Zielobjekt angeschaltet zu werden braucht. Es sind keine Lackier- oder Klebearbeiten an Komponenten des Fahrzeugs notwendig. Bei der Lichtquelle kann es sich um eine Leuchte mit einer in Form der Leitmarkierung ausgestalteten Blende, ein Projektor oder Laserpointer sein. Komplexe Leitmarkierungen lassen sich mittels einer holografischen Optik erzeugen.

Sinnvollerweise ist die Leitmarkierung aus mindestens einer auf die Endlage des Zielobjekts und/oder auf das Objekterkennungsmittel zulaufenden Begrenzungslinie gebildet. Die Begrenzungslinie begrenzt den vorgesehenen Verfahrweg des Zielobjekts insbesondere in Richtung der Querachse. Für ein treffsicheres Verbinden des Verbindungselementes mit dem Zielobjekt ist das Zielobjekt während der Annäherung des Fahrzeugs stets zwischen der oder den Begrenzungslinie(n) zu halten.

Die Begrenzungslinie(n) kann/können in distaler Richtung konisch aufgeweitet oder konisch zulaufend ausgeformt sein. Eine in distaler Richtung konisch aufgeweitete Begrenzungslinie hat den Vorteil, dass das Zielobjekt sich zunächst einfach innerhalb der Begrenzungslinie platzieren lässt und bei fortschreitender Annäherung eine exaktere Positionierung erfolgt. Eine in distaler Richtung konisch zulaufende Begrenzungslinie hingegen ist vorteilhaft, weil das Zielobjekt mit größerer Entfernung von dem Objekterkennungsmittel aufgrund seiner mithin konstanten Brennweite ebenfalls als kleiner wahrgenommen wird und mit schrumpfender Entfernung zusammen mit der Begrenzungslinie in der Bildebene wächst.

Vorteilhafterweise ist die Leitmarkierung entsprechend einer Kontur des Zielobjektes ausgeformt oder ergibt sich unter Berücksichtigung einer perspektivischen Verzerrung. Die als Leitmarkierung abgebildete Kontur des Zielobjektes ist vorzugsweise beim Passieren des Zielobjektes deckungsgleich mit dem Zielobjekt oder gibt zumindest einen größenmäßigen Rahmen vor, innerhalb dessen sich das Zielobjekt für eine treffsichere Kontaktierung mit dem Verbindungselement befinden muss.

Günstigerweise erstreckt sich die Leitmarkierung in einer x-y-Ebene (Horizontale), y-z-Ebene (Vertikale in Bewegungsrichtung) und/oder x-z-Ebene (quer zur Bewegungsrichtung) oder verfügt zumindest über Teilabschnitte, die sich mindestens über zwei dieser Ebenen erstrecken.

Es kann ein elektronisches Steuergerät vorhanden sein, mit welchem ein Abstand zu dem Zielobjekt aus dem Verhältnis einer bekannten Größe der Leitmarkierung und einer bekannten Größe des Zielobjektes ermittelt ist. Bei dieser Ausführungsform lässt sich über die Größenverhältnisse von Leitmarkierung und Zielobjekt die Entfernung in der Längsachse ableiten.

Gemäß einer günstigen Ausgestaltung ist das Verbindungselement eine Sattelkupplung und das Zielobjekt ein an einem zweiten Fahrzeug befestigter Königszapfen. Bei dieser Ausführungsform ist das Fahrzeug eine Sattelzugmaschine und das zweite Fahrzeug ein Sattelauflieger.

Die Komponente ist insbesondere aus gegenüberliegenden Flanken von seitlich des Einfahrbereiches angeordneten Kupplungshörnern gebildet. Diese Flanken bilden einen konisch zulaufenden Einfahrbereich, welcher den Königszapfen bei einer geringen seitlichen Fehlstellung führt. Aufgrund einer auf den Flanken der Kupplungshörner aufgebrachten Leitmarkierung kann das Fahrzeug zielgenauer an den Königszapfen herangefahren werden.

Es ist auch möglich, dass die Komponente aus einer unter dem Einfahrbereich angeordneten Querbrücke gebildet ist. Die Querbrücke kann vollständig unter dem Einfahrbereich der Sattelkupplung hinweglaufen und beidseitig mit der Unterseite der Kupplungsplatte verbunden sein, wodurch die Festigkeit der Sattelkupplung erheblich gesteigert ist. Prinzipiell wäre es auch möglich, die Querbrücke lediglich einseitig mit der Kupplungsplatte zu verbinden und als Halter für die Leitmarkierung zu nutzen.

Eine weitere alternative Ausgestaltung kann darin bestehen, dass die Komponente aus einer unter dem Einfahrbereich angeordneten Steckerkonsole eines automatisierten Steckkupplungssystems für Versorgungsleitungen gebildet ist. Die Steckerkonsole ist unter dem Einfahrbereich der Sattelkupplung angeordnet, so dass ein Königszapfen über die Steckerkonsole hinwegfahren kann. Die Steckerkonsole weist ein Gehäuse auf, dessen Oberseite als Komponente des Fahrzeugs zum Aufbringen einer Leitmarkierung geeignet ist.

Das Verbindungselement kann aber auch eine Containerverrieglung und das Zielobjekt ein an einem Container oder einem Wechselbehälter ausgebildeter Eckbeschlag sein. Mit Hilfe der an einer Komponente des Fahrzeugs angeordneten Leitmarkierung lässt sich das Fahrzeug besonders präzise an den Container oder Wechselbehälter manövrieren, so dass der Eckbeschlag von der zugehörigen Containerverriegelung getroffen wird.

Ebenso ist es möglich, dass das Verbindungselement eine Einweisrolle und das Zielobjekt ein an einem Wechselbehälter ausgebildeter Führungsrahmen ist. Die Einweisrolle gelangt bei rückwärtiger Annäherung des Fahrzeugs in Eingriff mit einem an der Unterseite des Containers oder Wechselbehälters ausgebildeten Führungsrahmen. Dieser Führungsrahmen ist während der Annäherung des Fahrzeugs in die Leitmarkierung zu bringen. Typischerweise ist dann die Komponente mit der Leitmarkierung aus einem Fahrzeugrahmenteil oder einem Karosseriebauteil des Fahrzeugs gebildet.

Gemäß einer weiteren Ausgestaltung kann das Verbindungselement eine an dem distalen Ende eines Frontladers angeordnete Werkzeugaufnahme und das Zielobjekt eine Aufnahme eines an dem Frontlader zu befestigenden Arbeitsgerätes sein. Bei einem Arbeitsgerät handelt es sich beispielsweise um eine Schaufel oder Gabel. Das Arbeitsgerät kann typischerweise über ein Schnellwechselsystem von dem Frontlader entfernt und durch ein anderes ausgetauscht werden. Da der Raum um das distale Ende des Frontladers vom Fahrersitz kaum einzusehen ist, kann das Fahrzeug mittels des Objekterkennungssystems solange an das Arbeitsgerät herangefahren werden, bis dessen Aufnahme in die Leitmarkierung gewandert ist. Bei dieser Ausführungsform ist es möglich, dass die Komponente aus der Werkzeugaufnahme gebildet ist.

Zum besseren Verständnis wird die Erfindung nachfolgend anhand von 15 Figuren näher erläutert. Es zeigen die
- **FIG. 1:**: eine Draufsicht auf ein Verbindungselement in Form einer Sattelkupplung mit einer an den Flanken der Kupplungshörner angeordneten Leitmarkierung;
- **FIG. 2:**: eine Draufsicht auf ein Verbindungselement in Form einer Sattelkupplung mit einer auf einer Querbrücke angeordneten Leitmarkierung;
- **FIG. 3:**: eine Draufsicht auf ein Verbindungselement in Form einer Sattelkupplung mit einer im Übergangsbereich von Querbrücke und Flanken der Kupplungshörner angeordneten Leitmarkierung;
- **FIG. 4:**: eine Draufsicht auf ein Verbindungselement in Form einer Sattelkupplung mit einer auf einer Steckerkonsole angeordneten Leitmarkierung;
- **FIG. 5:**: eine vergrößerte Draufsicht auf einen Verriegelungsabschnitt einer Sattelkupplung mit einer auf einer Querbrücke angeordneten Leitmarkierung in Form einer unterbrochenen Linie;
- **FIG. 6:**: eine vergrößerte Draufsicht auf einen Verriegelungsabschnitt einer Sattelkupplung mit einer auf einer Querbrücke angeordneten Leitmarkierung in Trapezform;
- **FIG. 7:**: eine vergrößerte Draufsicht auf einen Verriegelungsabschnitt einer Sattelkupplung mit einer auf einer Querbrücke angeordneten Leitmarkierung mit der Kontur des Zielobjektes;
- **FIG. 8:**: eine vergrößerte Draufsicht auf einen Verriegelungsabschnitt einer Sattelkupplung mit einer von einer Lichtquelle auf die Querbrücke projizierte Leitmarkierung;
- **FIG. 9:**: eine vergrößerte Draufsicht auf einen Verriegelungsabschnitt einer Sattelkupplung mit einer auf einer Querbrücke angeordneten Leitmarkierung in Form von zwei konisch in Richtung des Objekterkennungsmittels auseinanderlaufenden Begrenzungslinien;
- **FIG. 10:**: eine vergrößerte Draufsicht auf einen Verriegelungsabschnitt einer Sattelkupplung mit einer auf einer Querbrücke angeordneten Leitmarkierung in Form von zwei konisch in Richtung des Objekterkennungsmittels zusammenlaufenden Begrenzungslinien;
- **FIG. 11:**: eine Draufsicht auf ein Verbindungselement in Form einer Sattelkupplung mit einer auf einer Querbrücke angeordneten Leitmarkierung in Form eines Peilelementes gemäß einer ersten Ausgestaltung;
- **FIG. 12:**: eine Draufsicht auf ein Verbindungselement in Form einer Sattelkupplung mit einer auf einer Querbrücke angeordneten Leitmarkierung in Form eines Peilelementes gemäß einer zweiten Ausgestaltung;
- **FIG. 13:**: eine Draufsicht auf ein Fahrzeug mit einer Leitmarkierung an Fahrzeugrahmen- und Karosseriebauteil vor der Aufnahme eines Wechselbehälters;
- **FIG. 14:**: eine Seitenansicht auf einen Frontlader mit Arbeitsgerät und
- **FIG. 15:**: eine perspektivische Vorderansicht auf den Frontlader mit Objekterkennungsmittel ohne Arbeitsgerät.

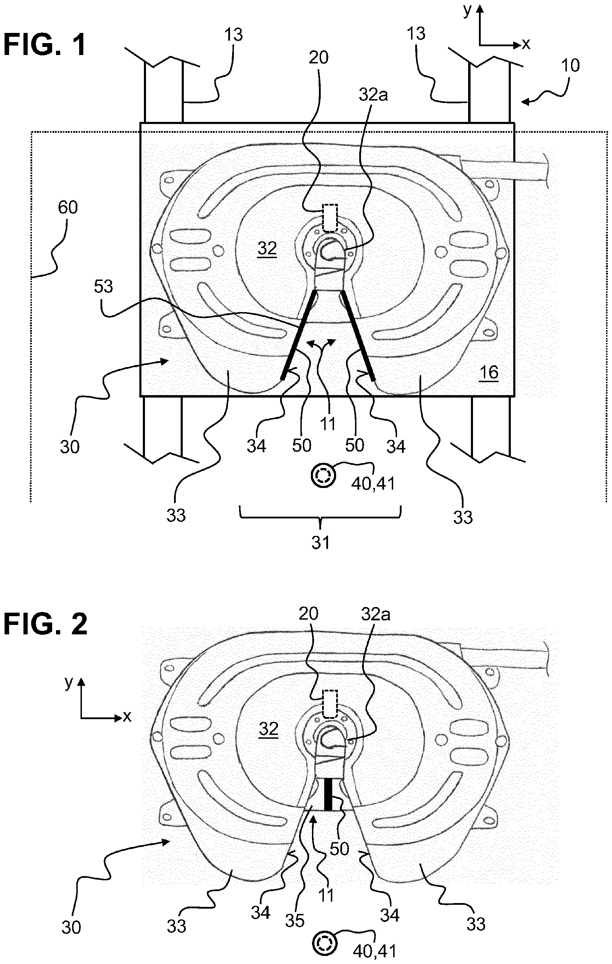

Die FIG. 1 zeigt in einer Draufsicht ein Verbindungselement 30 in Form einer Sattelkupplung 32, welche mittels einer Montageplatte 16 an Fahrzeugrahmenteilen 13 eines Fahrzeugs 10 befestigt ist. Bei dem Fahrzeug 10 handelt es sich insbesondere um eine Sattelzugmaschine.

Das Fahrzeug 10 hat sich in einer Längsachse y rückwärts einem zweiten Fahrzeug 60, insbesondere einem Sattelauflieger, angenähert. Die Längsachse y korrespondiert bei Geradeausfahrt des Fahrzeugs 10 mit der Fahrtrichtung. Das zweite Fahrzeug 60 ist schematisch als punktierte Linie dargestellt und überragt bereits das Fahrzeug 10 nebst seiner Sattelkupplung 32. Auf der Unterseite weist das zweite Fahrzeug 60 ein Zielobjekt 40 in Form eines nach unten vorstehenden Königszapfens 41 auf.

Die Sattelkupplung 32 ist an ihrer dem Königszapfen 41 zugewandten Seite mit zwei Kupplungshörnern 33 ausgebildet, deren einander zugewandten Flanken 34 einen V-förmigen Einfahrbereich 31 innerhalb der Kontur der Sattelkupplung 32 aufspannen. In rückwärtiger Richtung setzt sich der Einfahrbereich 31 in Verlängerung der Flanken 34 fort. Der Einfahrbereich 31 mündet in der Längsachse y in einem Verriegelungsabschnitt 32a der Sattelkupplung 32, in welchem der Königszapfen 41 nach Erreichen seiner Endlage lösbar mit der Sattelkupplung 32 verbunden ist.

Das Fahrzeug 10 muss sich zum Ankuppeln des zweiten Fahrzeugs 60 diesem derart annähern, dass der Königszapfen 41 in der Längsachse x mit einem möglichst geringen Versatz in der Querachse x in einen Einfahrbereich 31 der Sattelkupplung 32 gelangt. Diese Annäherung wird mittels einer beispielhaft in der Längsachse y des Verriegelungsabschnittes 32a eingesetztes Objekterkennungsmittel 20 erleichtert, in deren Blickfeld bei grober Ausrichtung des Fahrzeugs 10 bereits das zweite Fahrzeug 60 mit dem Königszapfen 41 sichtbar ist.

Zusätzlich ist auf einer in dem Einfahrbereich 31 angeordneten Komponente 11 eine Leitmarkierung 50 derart aufgebracht, dass sie ebenfalls von dem Objekterkennungsmittel 20 erfasst ist. In dem Ausführungsbeispiel der FIG. 1 ist die Leitmarkierung 50 als gegenüber der Sattelkupplung 32 kontrastreiche Lackierung auf den beiden einander zugewandten Flanken 34 der Kupplungshörner 33 dauerhaft aufgebracht. Die Leitmarkierung 50 kann insbesondere die gesamte Fläche der jeweiligen Flanke 34 einnehmen. Für ein treffsicheres Ankuppeln des Königszapfens 41 braucht der Fahrer lediglich den Königszapfen 41 während der Rückwärtsfahrt innerhalb der Leitmarkierung 50 zu halten, das heißt zwischen den kontrastreichen Flächen der Flanken 34.

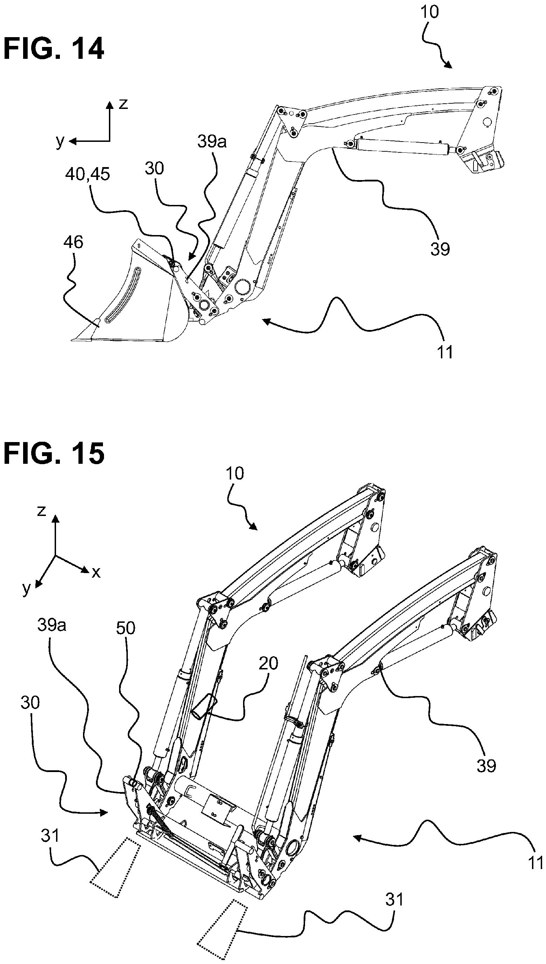

Die FIG. 2 zeigt ein alternative Ausführungsbeispiel, bei welchem die Leitmarkierung 50 tragende Komponente 11 aus einer an der Sattelkupplung 32 angeordneten Querbrücke 35 gebildet ist. Die Querbrücke 35 befindet sich im Übergang des Einfahrbereiches 31 zu dem Verriegelungsabschnitt 32a in vertikaler Hochachse z (vergleiche FIG. 14, FIG. 15) unter einem Niveau des Einfahrbereiches 31, so dass ein in die Sattelkupplung 32 einwandernder Königszapfen 41 die Querbrücke 35 kollisionsfrei überfahren kann. Die Querbrücke 35 kann zur Aussteifung der Sattelkupplung 32 beidseitig des Einfahrbereiches 31 an dieser angreifen.

Die Leitmarkierung 50 ist als in der Längsachse y verlaufender, durchgehender Strich auf die Querbrücke 35 aufgebracht. Sowohl die Querbrücke 35 als auch die darauf aufgebrachte Leitmarkierung 50 befinden sich im Sichtfeld des Objekterkennungsmittels 20. Während der Annäherung des Fahrzeugs 10 (siehe FIG: 1) ist anzustreben, dass der von dem Objekterkennungsmittel 20 erfasste Königszapfen 41 durch entsprechende Lenkmanöver möglichst mittig bezüglich der Leitmarkierung 50 gehalten ist.

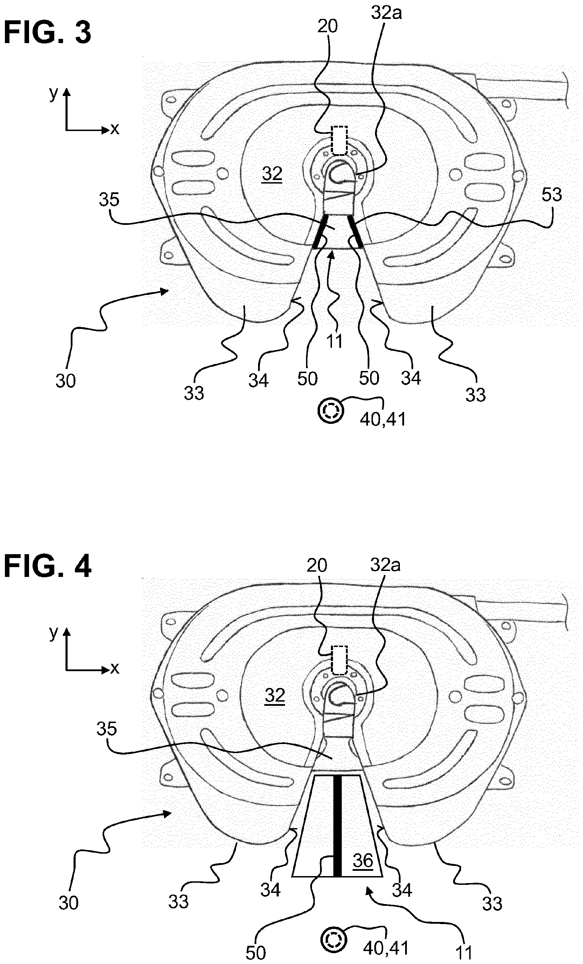

In der FIG. 3 ist ein weiteres Ausführungsbeispiel dargestellt, bei welchem die Leitmarkierung 50 ebenfalls auf die Querbrücke 35 als Komponente 11 aufgebracht ist. Die Leitmarkierung 50 umfasst jedoch zwei in der Längsachse y in rückwärtiger Richtung konisch auseinanderlaufende Begrenzungslinien 53, die seitlich nach außen durch die Flanken 34 der Kupplungshörner 33 begrenzt sind. Beide Begrenzungslinien 53 liegen im Sichtfeld des Objekterkennungsmittels 20. Für ein treffsicheres Ankuppeln des Königszapfens 41 muss dieser während der Annäherung des Fahrzeugs 10 zwischen den beiden Begrenzungslinien 53 positioniert sein.

Die FIG. 4 zeigt ein alternatives Ausführungsbeispiel mit einer unter dem Einfahrbereich 31 angeordneten Steckerkonsole 36 eines automatischen Steckkupplungssystems für Versorgungsleitungen. Während des Ankuppelns wird die Steckerkonsole 36 von dem sich annähernden Königszapfen 41 zunächst berührungsfrei überfahren und anschließend mit einer aufliegerseitigen, hier nicht gezeigten Steckerkonsole verbunden. Die Komponente 11, welche die Leitmarkierung 50 trägt, ist die Steckerkonsole 36. Die Leitmarkierung 50 ist auf der in der Hochachse z nach oben ausgerichteten Oberseite der Steckerkonsole 36 aufgebracht und liegt dadurch im Sichtfeld des Objekterkennungsmittels 20.

Die Leitmarkierung 50 ist als in der Längsachse y ausgerichteter, durchgehender Strich geformt, welcher vollständig über die Steckerkonsole 36 verläuft. Ein sich annähernder Königszapfen 41 sollte durch Lenkbewegungen des Fahrzeugs 10 möglichst mittig über dem Strich der Leitmarkierung 50 gehalten werden.

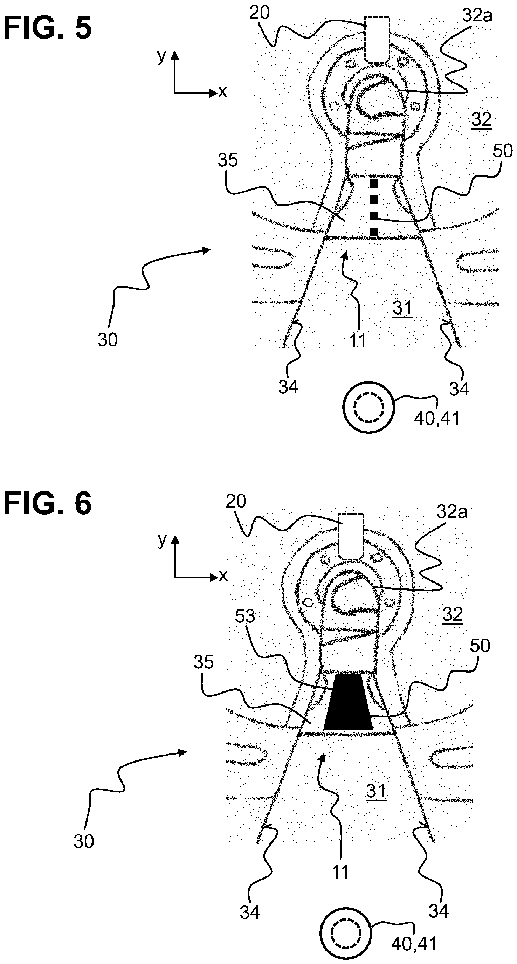

In der FIG. 5 ist ein vergrößerter Ausschnitt des Verriegelungsabschnittes 32a einer Sattelkupplung 32 zusammen mit der Querbrücke 35 dargestellt. Die Leitmarkierung 50 ist vergleichbar mit der Ausführungsform in FIG. 2 auf der Querbrücke 35 aufgebracht.

Abweichend wurde hier jedoch als Leitmarkierung 50 anstelle eines in der Längsachse y liegenden, durchgehenden Striches ein unterbrochener beziehungsweise punktierter Strich gewählt.

Die FIG. 6 zeigt in derselben Ansicht wie FIG. 5 eine weitere Ausgestaltung der auf die Querbrücke 35 aufgebrachten Leitmarkierung 50 in einer Trapezform. Die beiden auseinanderlaufenden Seiten der Leitmarkierung 50 sind jeweils im Wesentlichen äquidistant zu den Flanken 34 der Kupplungshörner 33 ausgerichtet und bilden eine Begrenzungslinie 53 in Richtung der Querachse x für den Königszapfen 41. Während einer Annäherung des Fahrzeugs 10 an den Königszapfen 41 sollte dieser möglichst zwischen den gegenüberliegenden Begrenzungslinien 53 gehalten sein.

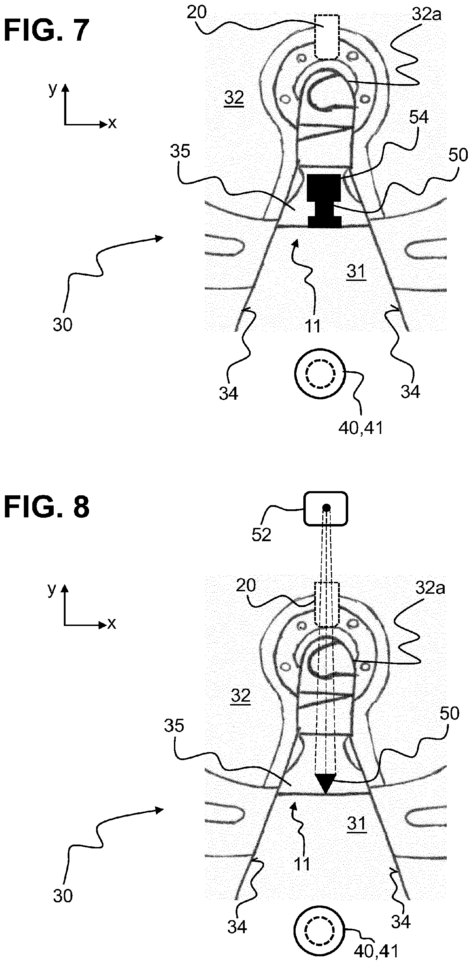

Die FIG. 7 zeigt dieselbe Ansicht wie die FIG. 5 und FIG. 6. Die Leitmarkierung 50 ist auch hier auf der Querbrücke 35 aufgebracht und dadurch von dem Objekterkennungsmittel 20 sichtbar. Die Leitmarkierung 50 weist jedoch eine vereinfachte Kontur des Zielobjektes 40 auf, im vorliegenden Ausführungsbeispiel die des Königszapfens 41. Während der Annäherung des Fahrzeugs 10 an den Königszapfen 41, sollte dieser beim Passieren der Querbrücke 35 möglichst deckungsgleich mit der gleichgeformten Leitmarkierung 50 ausgerichtet sein.

In der Ausführungsform gemäß der FIG. 8 ist eine temporär sichtbare Leitmarkierung 50 dargestellt, die mittels einer in der Hochachse z höher gelegenen Lichtquelle 52 auf die als Komponente 11 gewählte Querbrücke 35 mit sichtbarem Licht geworfen wird. Nach einem erfolgreichen Ankuppeln des Königszapfens 41 kann die Lichtquelle 52 abgeschaltet werden, so dass keine Leitmarkierung 50 mehr sichtbar ist.

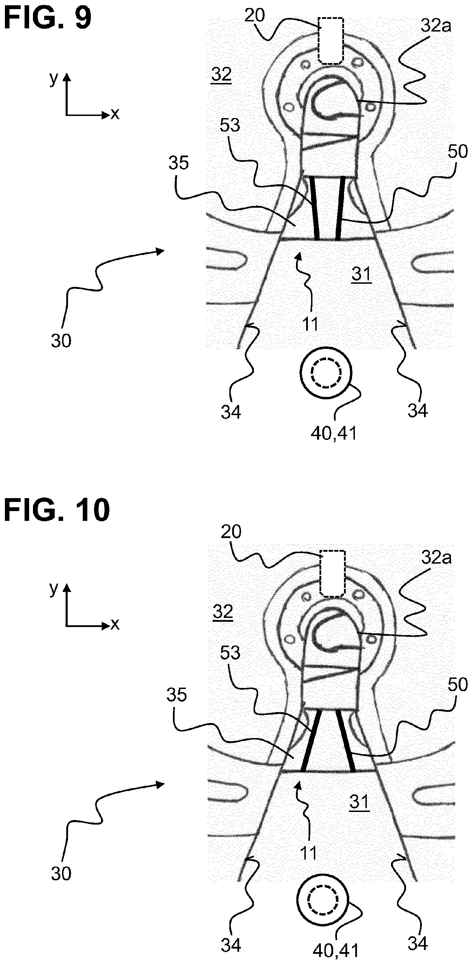

Die FIG. 9 zeigt eine auf der Querbrücke 35 als Komponente 11 aufgebrachten Leitmarkierung 50, die aus zwei in Richtung des Verriegelungsabschnitts 32a konisch zulaufenden Begrenzungslinien 53 gebildet ist, zwischen denen der Königszapfen 41 während des Ankuppelns positioniert sein soll. In der FIG. 10 verlaufen die aus zwei Begrenzungslinien 53 gebildeten Leitmarkierungen 50 in Richtung des Verriegelungsabschnittes 32a konisch zusammen.

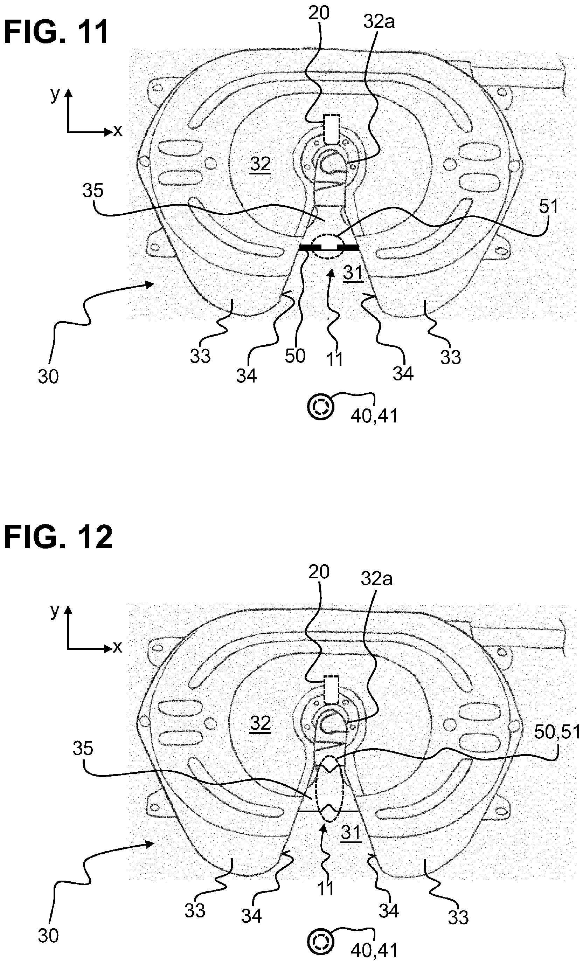

Die FIG. 11 betrifft eine weitere, alternative Ausführungsform mit einer an der Querbrücke 35 ausgebildeten Leitmarkierung 50 in Form eines Peilelementes 51. Das Peilelement 51 umfasst zwei in der Querachse x verlaufende, bezüglich der Querbrücke 35 aufrechtstehende Wandabschnitte und eine darin in der Längsachse y eingebrachte Ausnehmung. Sowohl die Wandabschnitte als auch die Ausnehmung sind von dem Objekterkennungsmittel 20 bei Annäherung an den Königszapfen 41 sichtbar. Während der Annäherung des Fahrzeugs 10 sollte so manövriert werden, dass in dem von dem Objekterkennungsmittel 20 generierten Bild der Königszapfen 41 hinter der Ausnehmung sichtbar ist.

In der FIG. 11 ist eine zweite Ausführungsform einer Leitmarkierung 50 unter Zuhilfenahme von zwei Peilelementen 51 dargestellt. Die Leitmarkierung 50 ist aus zwei in der Querbrücke 35 ausgeformten und zueinander in der Längsachse y fluchtenden Peilelementen 51, die zum Beispiel Ausnehmung(en) und/oder Erhebung(en) sind, gebildet. Während der Annäherung wird das Zielobjekt 40 in Form des Königszapfens 41 nach dem Kimme-Korn-Prinzip in Verlängerung der beiden Peilelemente 51 anvisiert.

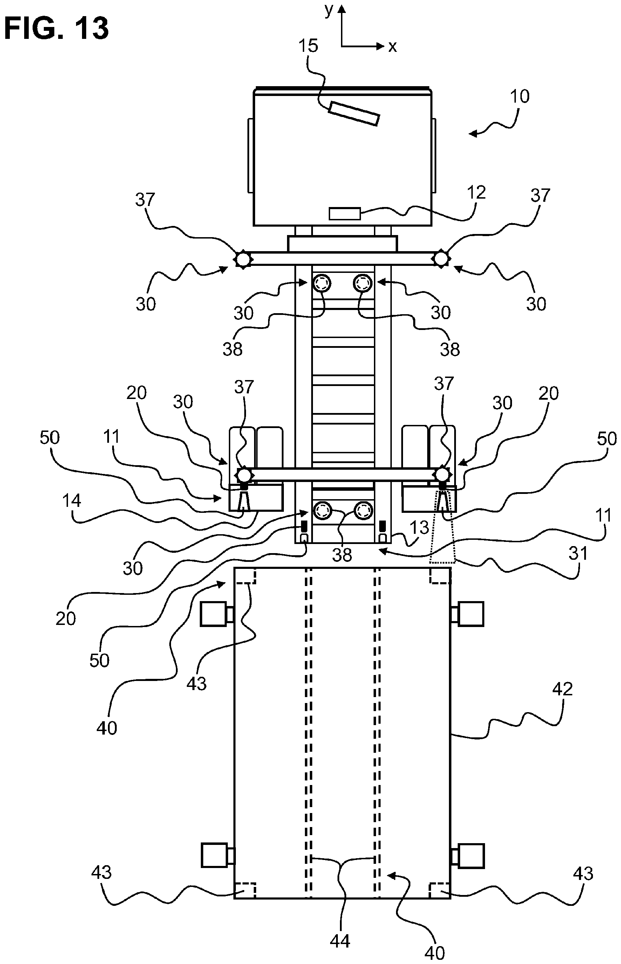

Die FIG. 13 zeigt ein Fahrzeug 10 für den Transport eines dahinter abgestellten Containers oder Wechselbehälters 42.

Das Fahrzeug 10 weist als Verbindungselement 30 mehrere Containerverriegelungen 37 auf, die bei einem korrekt aufgenommenen Container oder Wechselbehälter 42 in darin vorgesehene Eckbeschläge 43 eintauchen und diesen lösbar während des Transportes halten. Das Zielobjekt 40 bei einem derartigen Fahrzeug 10 können die Eckbeschläge 43 des Containers oder Wechselbehälters 42 sein. Um diese möglichst exakt anfahren zu können, ist in räumlicher Nähe zu mindestens einem der Containerverriegelungen 37 eine Objekterkennungsmittel 20 angebracht, welches einen hinter dem Fahrzeug 10 und in Richtung des nächstgelegenen Eckbeschlages 43 ausgerichteten Einfahrbereich 31 erfasst. Zwischen dem Objekterkennungsmittel 20 und dem Zielobjekt 40 ist auf einer Komponente 11 in Form eines Karosseriebauteils 14, das auch ein Schutzblech oder ein anderes Verkleidungsbauteil sein kann, eine Leitmarkierung 50 aufgebracht. Während einer Rückwärtsfahrt des Fahrzeugs 10 in Richtung des stehenden Containers oder Wechselbehälters 42 sollte so rangiert werden, dass das Zielobjekt 40 in Form von einem der Eckbeschläge 43 fluchtend innerhalb der Kontur der Leitmarkierung 50 positioniert ist.

Das Zielobjekt 40 kann anstelle von einem oder mehreren der Eckbeschläge 43 auch ein auf der Unterseite des Containers oder Wechselbehälters 42 parallel zur Längsachse y verlaufender Führungsrahmen 44 sein. Dieser Führungsrahmen 44 gelangt während eines Aufnehmens des Containers oder Wechselbehälters 42 mit einem Verbindungselement 30 des Fahrzeugs 10 in Form von Einweisrollen 38 in Wirkeingriff. Die Einweisrollen 38 sind drehbar um die Hochachse z gelagert und befinden sich bei aufgeladenem Container oder Wechselbehälter 42 innerhalb des Führungsrahmens 44. Für ein exaktes Anfahren des Führungsrahmens 44 ist in räumlicher Nähe zu mindestens einer der Einweisrollen 38 an einem Fahrzeugrahmenteil 13 ein Objekterkennungsmittel 20 angebracht, dessen Sichtfeld in Richtung des Containers oder Wechselbehälters 42 ausgerichtet ist. In dem Sichtfeld des Objekterkennungsmittels 20 befindet sich außerdem eine auf dem Fahrzeugrahmenteil 13 angebrachte Leitmarkierung 50.

In Sichtweite des Fahrers ist in dem Fahrzeug 10 eine Anzeigevorrichtung 15 angeordnet, welche ein sichtbares Bild des Zielobjektes 40, insbesondere des Eckbeschlages 43 und/oder des Führungsrahmens 44, relativ zu der Leitmarkierung 50 anzeigt.

Die FIG. 14 und FIG. 15 zeigen das Ausrichtsystem an einem Frontlader 39, dessen Verbindungselement 30 eine Werkzeugaufnahme 39a zur lösbaren Befestigung eines Arbeitsgerätes 46 ist, wie zum Beispiel einer Schaufel. Das Arbeitsgerät 46 weist als Zielobjekt 40 eine komplementär zu der Werkzeugaufnahme 39a ausgebildete Aufnahme 45 auf, in welche die Werkzeugaufnahme 39a treffsicher zu manövrieren ist.

Das Manövrieren wird mittels der an der Werkzeugaufnahme 39a angebrachten Leitmarkierung 50 vereinfacht, die im Sichtfeld des an dem Frontlader 39 angeordneten Objekterkennungsmittels 20 liegt. Während der Annäherung an das Arbeitsgerät 46 muss lediglich dessen Aufnahme 45 in die Kontur der Leitmarkierung 50 gebracht werden.

### BEZUGSZEICHENLISTE

- 10: Fahrzeug
- 11: Komponente
- 12: Steuergerät
- 13: Fahrzeugrahmenteil
- 14: Karosseriebauteil
- 15: Anzeigevorrichtung
- 16: Montageplatte

- 20: Objekterkennungsmittel

- 30: Verbindungselement
- 31: Einfahrbereich
- 32: Sattelkupplung
- 32a: Verriegelungsabschnitt
- 33: Kupplungshörner
- 34: Flanke Kupplungshorn
- 35: Querbrücke
- 36: Steckerkonsole
- 37: Containerverriegelung
- 38: Einweisrolle
- 39: Frontlader
- 39a: Werkzeugaufnahme

- 40: Zielobjekt
- 41: Königszapfen
- 42: Container/Wechselbehälter
- 43: Eckbeschlag Container/Wechselbehälter
- 44: Führungsrahmen
- 45: Aufnahme Arbeitsgerät
- 46: Arbeitsgerät

- 50: Leitmarkierung
- 51: Peilelement
- 52: Lichtquelle
- 53: Begrenzungslinie
- 54: Leitmarkierung mit Kontur Zielobjekt

- 60: zweites Fahrzeug

- x: Querachse
- y: Längsachse
- z: Hochachse

## Patentansprüche

1. Ausrichtsystem zur Annäherung eines Fahrzeugs (10) an ein hierzu räumlich beabstandetes Zielobjekt (40), umfassend ein an dem Fahrzeug (10) angebrachtes Objekterkennungsmittel (20) und ein Verbindungselement (30), mit welchem das Zielobjekt (40) in einer Endlage lösbar gehalten ist, wobei das Objekterkennungsmittel (20) in Richtung des Zielobjektes (40) ausgerichtet und mittels der Daten des Objekterkennungsmittels (20) ein Bild generiert ist, in welchem das Zielobjekt (40) zusammen mit einer Leitmarkierung (50) während der Annäherung des Fahrzeugs (10) dargestellt ist,
**dadurch gekennzeichnet,**
**dass** die Leitmarkierung (50) an mindestens einer in einem Einfahrbereich (31) des Verbindungselementes (30) angeordneten Komponente (11) des Fahrzeugs (10) aufgebracht ist.

2. Ausrichtsystem nach Anspruch 1, **dadurch gekennzeichnet, dass** die Leitmarkierung (50) physisch permanent vorhanden ist.

3. Ausrichtsystem nach Anspruch 1 oder 2, **dadurch gekennzeichnet, dass** die Leitmarkierung (50) auf die Komponente (11) lackiert, geklebt, geprägt, gefräst und/oder aus der Komponente (11) reliefartig hervortretend ausgebildet ist.

4. Ausrichtsystem nach Anspruch 1 oder 2, **dadurch gekennzeichnet, dass** die Leitmarkierung (50) mindestens ein starr oder beweglich an der Komponente (11) gelagertes Peilelement (51) umfasst.

5. Ausrichtsystem nach Anspruch 1, **dadurch gekennzeichnet, dass** die Leitmarkierung (50) mittels einer Lichtquelle (52) auf die Komponente (11) projiziert ist.

6. Ausrichtsystem nach einem der Ansprüche 1 bis 5, **dadurch gekennzeichnet, dass** die Leitmarkierung (50) aus mindestens einer auf die Endlage des Zielobjekts (40) und/oder auf das Objekterkennungsmittel (20) zulaufenden Begrenzungslinie (53) gebildet ist.

7. Ausrichtsystem nach Anspruch 6, **dadurch gekennzeichnet, dass** die Begrenzungslinie(n) (53) in distaler Richtung konisch aufgeweitet oder konisch zulaufend ausgeformt ist/sind.

8. Ausrichtsystem nach einem der Ansprüche 1 bis 5, **dadurch gekennzeichnet, dass** die Leitmarkierung (50) entsprechend einer Kontur (54) des Zielobjektes (40) ausgeformt ist oder sich unter Berücksichtigung einer perspektivischen Verzerrung ergibt.

9. Ausrichtsystem nach einem der Ansprüche 1 bis 8, **dadurch gekennzeichnet, dass** sich die Leitmarkierung (50) in einer x-y-Ebene (Horizontale), y-z-Ebene (Vertikale in Bewegungsrichtung) und/oder x-z-Ebene (quer zur Bewegungsrichtung) erstreckt oder zumindest über Teilabschnitte verfügt, die sich mindestens über zwei dieser Ebenen erstrecken.

10. Ausrichtsystem nach einem der Ansprüche 1 bis 9, **dadurch gekennzeichnet, dass** ein elektronisches Steuergerät (12) vorhanden ist, mit welchem ein Abstand zu dem Zielobjekt (40) aus dem Verhältnis einer bekannten Größe der Leitmarkierung (50) und einer bekannten Größe des Zielobjektes (40) ermittelt ist.

11. Ausrichtsystem nach einem der Ansprüche 1 bis 10, **dadurch gekennzeichnet, dass** das Verbindungselement (30) eine Sattelkupplung (32) und das Zielobjekt (40) ein an einem zweiten Fahrzeug (60) befestigter Königszapfen (41) ist.

12. Ausrichtsystem nach Anspruch 11, **dadurch gekennzeichnet, dass** die Komponente (11) aus gegenüberliegenden Flanken (34) von seitlich des Einfahrbereiches (31) angeordneten Kupplungshörnern (33) gebildet ist.

13. Ausrichtsystem nach Anspruch 11, **dadurch gekennzeichnet, dass** die Komponente (11) aus einer unter dem Einfahrbereich (31) angeordneten Querbrücke (35) gebildet ist.

14. Ausrichtsystem nach Anspruch 11, **dadurch gekennzeichnet, dass** die Komponente (11) aus einer unter dem Einfahrbereich (31) angeordneten Steckerkonsole (36) eines automatisierten Steckkupplungssystems für Versorgungsleitungen gebildet ist.

15. Ausrichtsystem nach einem der Ansprüche 1 bis 10, **dadurch gekennzeichnet, dass** das Verbindungselement (30) eine Containerverrieglung (37) und das Zielobjekt (40) ein an einem Container (42) oder einem Wechselbehälter ausgebildeter Eckbeschlag (43) ist.

16. Ausrichtsystem nach einem der Ansprüche 1 bis 10, **dadurch gekennzeichnet, dass** das Verbindungselement (30) eine Einweisrolle (38) und das Zielobjekt (40) ein an einem Wechselbehälter (42) ausgebildeter Führungsrahmen (44) ist.

17. Ausrichtsystem nach Anspruch 15 oder 16, **dadurch gekennzeichnet, dass** die Komponente (11) aus einem Fahrzeugrahmenteil (13) oder einem Karosseriebauteil (14) des Fahrzeugs (10) gebildet ist.

18. Ausrichtsystem nach einem der Ansprüche 1 bis 10, **dadurch gekennzeichnet, dass** das Verbindungselement (30) eine an dem distalen Ende eines Frontladers (39) angeordnete Werkzeugaufnahme (39a) und das Zielobjekt (40) eine Aufnahme (45) eines an dem Frontlader (39) zu befestigenden Arbeitsgerätes (46) ist.

19. Ausrichtsystem nach Anspruch 18, **dadurch gekennzeichnet, dass** die Komponente (11) aus einem mit der Werkzeugaufnahme (39a) fluchtenden Abschnittes des distalen Endes des Frontladers (39) gebildet ist.
